# EUROPÄISCHE PATENTSCHRIFT

(11) **EP 3 371 026 B1**
(45) Veröffentlichungstag und Bekanntmachung des Hinweises auf die Patenterteilung: **06.10.2021**
(21) Anmeldenummer: 16798093.7
(22) Anmeldetag: 28.10.2016
(51) Int. Cl.: B60W 50/14, B60W 50/16

(54) **VERFAHREN UND VORRICHTUNG ZUR KOPPLUNG VON ELEKTRONISCHEN GERÄTEN MIT EINEM KRAFTFAHRZEUG**
METHOD AND DEVICE FOR COUPLING ELECTRONIC APPLIANCES TO A MOTOR VEHICLE
PROCÉDÉ ET DISPOSITIF DE COUPLAGE D'APPAREILS ELECTRONIQUES AVEC UN VÉHICULE À MOTEUR

(30) Priorität: 02.11.2015 DE 102015221436
(43) Veröffentlichungstag der Anmeldung: 12.09.2018
(73) Patentinhaber: Continental Automotive GmbH, 30165 Hannover (DE)
(72) Erfinder: SCHILD, Bernhard, 35576 Wetzlar (DE)
(74) Vertreter: Continental Corporation
(86) Internationale Anmeldenummer: PCT/EP2016/076120
(87) Internationale Veröffentlichungsnummer: WO 2017/076777

(56) Entgegenhaltungen:
- DE-A1-102012 208 179
- DE-A1-102012 216 919
- US-A1- 2015 053 066
- Darius Schuiszill: "Myo im Test: Gadget-Armband erlaubt Gestensteuerung von iTunes und Co.", , 10. April 2015 (2015-04-10), XP002766112, Gefunden im Internet: URL:https://www.netzwelt.de/news/152112-my o-test-gadget-armband-erlaubt-gestensteuer ung.html [gefunden am 2017-01-18]

## Beschreibung

Die vorliegende Erfindung betrifft ein Verfahren und eine Vorrichtung zur Kopplung von elektronischen Geräten, insbesondere zur elektronischen Kopplung mit dem Infotainment-System eines Kraftfahrzeugs. Eine solche Vorrichtung kann auch als Netzknoten bezeichnet werden und ist insbesondere ein Smartphone, das dazu eingerichtet ist, Steuerbefehle von einem Bewegungserfassungsgerät an ein Infotainment-System zu übertragen.

Aus der DE 10 2012 216 919 A ist es bekannt ein Infotainment-system eines Fahrzeugs über ein Mobiltelefon zu steuern.

Aus der DE 10 2012 208 179 A ist eine Elektronikeinrichtung eines Kraftfahrzeugs bekannt, die eine Schnittstelleneinheit aufweist, an die verschiedene Geräte, beispielweise ein Smartphone, angeschlossen werden können.

Aus der US 2015/0053066 A ist die Steuerung eines Infotainmentsystems mittels Gesten bekannt. Es ist ein mobiles Gerät vorgesehen, das als "wearable" ausgebildet sein kann und mit dem Infotainmentsystem kommuniziert.

Moderne Fahrzeuge verfügen über eine große Bandbreite an Informations- und Multimedia-Systemen. Dazu gehören Radio, Navigationssystem, Bordcomputer, CD-, DVD- und Blu-ray-Player, Internet- und Mobilfunk-Funktionen und dergleichen. Diese Vielzahl an Systemen und Funktionen wird unter dem Begriff In-Vehicle-Infotainment (IVI) zusammengefasst.

Um einen Fahrzeugführer nicht zu sehr in seiner Aufmerksamkeit im Straßenverkehr durch die Bedienung von IVI-Systemen einzuschränken, wurden in der Vergangenheit verschiedene Bedienkonzepte entwickelt. Dazu gehören beispielsweise direkt am Lenkrad angebrachte Knöpfe und Schalter, Kombinationssteuerelemente in der Mittelkonsole, Sprachsteuerung und dergleichen.

Gerade im Bereich der Steuerung durch Bewegungserkennung wurden in den vergangenen Jahren eine Menge neuer Systeme entwickelt. Zu den Bewegungserkennungssystemen gehören auch sogenannte "Wearables", bei denen die Eingabeapparatur schon innerhalb eines Kleidungsstücks vorhanden ist und deren Kommunikation z. B. über Bluetooth-Low-Energy (BLE) stattfindet. Diese Systeme eignen sich prinzipiell auch zur Steuerung von IVI-Systemen. Die meisten Bewegungserkennungssysteme haben allerdings nur eine begrenzte Anzahl an Kommunikationsschnittstellen über die sie mit anderen Geräten kommunizieren können.

Auch IVI-Systeme bieten meist nur eine geringe Anzahl an Kommunikationsschnittstellen, über welche sich externe Geräte anschließen lassen. Dabei wird davon ausgegangen, dass die Software Architektur des IVI-Systems eine logische Bedienschnittstelle vorsieht, auf die mittels einer Kommunikationsschnittstelle von extern zugegriffen werden kann. Eine solche Bedienschnittstelle enthält i. A. mindestens die Kommandos vorwärts/nach oben sowie rückwärts/nach unten zwecks Navigation innerhalb von Listen und evtl. weitere Navigationsbefehle. Optional kann auch die Angabe einer Schrittweite für eine solche Navigation, etwa abgeleitet von der Intensität der Eingabe, möglich sein, woraus z. B. eine Scrollgeschwindigkeit abgeleitet werden kann.

Daher wäre es von Vorteil, wenn es eine Möglichkeit gäbe, ein beliebiges System, wie z. B. ein IVI-System, mit möglichst vielen verschiedenen Steuergeräten steuern zu können, ohne dass diese dazu explizit aufeinander abgestimmte oder kompatible Schnittstellen aufweisen müssen. Ferner wäre es von Vorteil, verschiedene Ausgabegeräte zur Bestätigung einer Steuerungseingabe anschließen zu können, ohne dass das IVI-System hierzu speziell abgestimmte Schnittstellen aufweisen muss. Auch Ablehnungen von Eingaben können auf diese Weise, z. B. mittels spezieller Vibration innerhalb von "Wearables", bekannt gemacht werden.

Die vorliegende Erfindung löst diese Aufgabe durch die Bereitstellung eines Systems nach Anspruch 1, die Verwendung eines mobilen Datenverarbeitungsgeräts nach Anspruch 7 und ein Verfahren nach Anspruch 8.

Die vorteilhaften Ausgestaltungen der Erfindung sind in den Unteransprüchen ausgeführt.

Ein erfindungsgemäßes System besteht aus einem Fahrzeug mit Infotainment-System, einem mobilen Datenverarbeitungsgerät und einem Bewegungserfassungsgerät. Eine erste Kommunikationsschnittstelle ist dazu eingerichtet, Steuerbefehle I_{S} von dem Bewegungserfassungsgerät an das mobile Datenverarbeitungsgerät zu übertragen. Das mobile Datenverarbeitungsgerät ist dazu eingerichtet, die Steuerbefehle I_{S} in Anweisungen I_{A} an das Infotainment-System zu übersetzen. Eine zweite Kommunikationsschnittstelle ist dazu eingerichtet, die Anweisungen I_{A} von dem mobilen Datenverarbeitungsgerät an das Infotainment-System zu übertragen.

Das Infotainment-System kann verschiedene Komponenten umfassen, welche in Fahrzeugen zur Bereitstellung von Informationen, zur Steuerung des Fahrzeuges und zur Unterhaltung eingesetzt werden können. Zu besagten Komponenten zählen beispielsweise Navigationssysteme, Multimediasysteme (Radio, CD-, DVD- und Blu-ray-Player, etc.), Bordcomputer, Internet- und Mobilfunkeinheiten, Ausgabegeräte, wie Bildschirme und Lautsprecher und Eingabegeräte, wie Tasten, berührungsempfindliche Bildschirme, Steuerknüppel, Multifunktions-Knöpfe, und dergleichen. Das mobile Datenverarbeitungsgerät kann ein tragbares Gerät sein, welches zur Verarbeitung von Daten eingerichtet ist, beispielsweise ein Mobiltelefon, ein Smartphone, ein Tablet-PC, ein Notebook oder dergleichen. Das mobile Datenverarbeitungsgerät kann ein Betriebssystem wie Android, iOS, Windows mobile, etc. als Plattform für Programme verwenden. Das Bewegungserfassungsgerät kann ein Gerät sein, welches bestimmte Sensoren dazu verwendet, Bewegungen und/oder Gesten eines Nutzers zu erkennen und diese in Steuersignale umzuwandeln, beispielsweise ein Myo-Armband oder ein "Wearable" (Kleidung mit Eingabeapparatur). Besagte Sensoren können Beschleunigungssensoren, Lagesensoren, Kraftsensoren (Dehnungsmessstreifen, etc.), Kameras mit geeigneten Bildanalyseprogrammen, Sensoren zur Erfassung von Muskelkontraktionen (Myo-Sensoren) und dergleichen sein. Die erste Kommunikationsschnittstelle ermöglicht einen Datenaustausch zwischen dem Bewegungserfassungsgerät und dem mobilen Datenverarbeitungsgerät. Der Datenaustausch kann in beide Richtungen, von dem Bewegungserfassungsgerät zu dem mobilen Datenverarbeitungsgerät und umgekehrt, erfolgen. Jedoch ist zumindest eine Übertragung von Informationen von dem Bewegungserfassungsgerät zu dem mobilen Datenverarbeitungsgerät über die erste Kommunikationsschnittstelle möglich. Die erste Kommunikationsschnittstelle kann eine drahtlose Kommunikationsschnittstelle wie z. B. Wireless-Fidelity (WiFi), Near Field Connection (NFC)/Radio-Frequency-Identification (RFID), Bluetooth, Bluetooth-Low-Energy (BLE) und dergleichen sein. Die zweite Kommunikationsschnittstelle ermöglicht einen Datenaustausch zwischen dem mobilen Datenverarbeitungsgerät und dem Infotainment-System. Typischerweise kann die zweite Kommunikationsschnittstelle ebenfalls eine drahtlose Kommunikationsschnittstelle sein, wobei dieselben Arten von Kommunikationsschnittstellen wie bei der ersten Kommunikationsschnittstelle in Frage kommen. Gemäß einer Ausführungsvariante ist es aber auch möglich, dass die zweite Kommunikationsschnittstelle eine kabelgebundene Kommunikationsschnittstelle ist. Der Datenaustausch über die beiden Kommunikationsschnittstellen kann bevorzugt in beide Richtungen, von dem Bewegungserfassungsgerät über das mobile Datenverarbeitungsgerät zu dem Infotainment-System und umgekehrt von dem Infotainment-System über das mobile Datenverarbeitungsgerät zu dem Bewegungserfassungsgerät, erfolgen. Jedoch ist mindestens eine Übertragung von Informationen von dem mobilen Datenverarbeitungsgerät zu dem Infotainment-System möglich. Die zweite Kommunikationsschnittstelle kann besonders bevorzugt von einem anderen Typ sein bzw. ein anderes Protokoll benutzen als die erste Schnittstelle und kann eine drahtlose Kommunikationsschnittstelle wie z. B. WiFi, NFC/RFID, Bluetooth, BLE und dergleichen sein. Übliche mobile Datenverarbeitungsgeräte, wie Mobiltelefone bzw. Smartphones, verfügen üblicherweise über mehr Arten von Kommunikationsschnittstellen als Infotainment-Systeme in Kraftfahrzeugen. Daher ist es vorteilhaft, dass solche mobilen Datenverarbeitungsgeräte in dem erfindungsgemäßen System als Netzknoten zwischen dem Infotainment-System und dem Bewegungserfassungsgerät dienen. So wird die Kommunikation von Bewegungserfassungsgeräten mit dem Infotainment-System eines Kraftfahrzeuges ermöglicht, obwohl das Infotainment-System selbst gar keine geeigneten Kommunikationsschnittstellen für die Kommunikation mit dem Bewegungserfassungsgerät aufweist.

Unter Berücksichtigung der Hardwareausstattung älterer Infotainment-Systeme, die zwar ein Radio enthalten aber weder Wi-Fi noch LAN oder Bluetooth unterstützen, kann die zweite Kommunikationsschnittstelle vom mobilen Datenverarbeitungsgerät zum Infotainment-System als "Radio-Übertragung" mittels FM-Transmitter ausgestaltet sein. Dabei können die Steuerkommandos über das Radio Data System (RDS) unter Berücksichtigung der im Infotainment-System schon vorhandenen Softwarestruktur bezüglich Ereignisverarbeitung, z. B. in Form von RDS-TAs (Traffic Announcements, Verkehrsdurchsagen) mit für eine eventuell laufende Navigation unverfänglichen Werten, an das Infotainment System übertragen werden. Es kann auch die Übertragung der Steuerkommandos innerhalb des Programmnamens (PS-Code, program service name) oder des RDS-Radiotextes (RT-Code), der für die Übermittlung von z. B. Interpret und Musiktitel vorgesehen ist, erfolgen.

Eine Ausstattung der Infotainment-Systeme mit FM und RDS Unterstützung insbesondere für TAs ist seit Jahren durchgehend vorhanden, so dass für ein älteres Infotainment-System nur eine Software-Änderung notwendig ist.

Analog zur vorherigen Lösung kann eine "Radio-Übertragung" Digital-Radio-Systeme wie DAB (Digital Audio Broadcasting) nutzen. Unter Berücksichtigung der Tatsache, dass auch schon in der Vergangenheit bei höherwertigen Infotainment-Systemen Doppeltuner verbaut worden sind, lässt sich eine zusätzliche Übertragung von Steuerbefehlen auch so realisieren, dass bei diesen Systemen die Radio-Nutzung bei gleichzeitiger Verwendung des FM-Transmitters nicht eingeschränkt werden muss, wenn der Background-Tuner diesen minimalen Kommunikationsaufwand neben seinen ursprünglichen Aufgaben erledigt.

Bevorzugt kann das mobile Datenverarbeitungsgerät dazu eingerichtet sein mehrere Steuerbefehle I_{S} in eine oder mehrere Anweisungen I_{A} zusammenfassen.

Diese Ausführungsvariante ist insbesondere dann bevorzugt, wenn ein älteres Infotainment-System verwendet wird, welches eine weniger komplexe Softwarestruktur hat. Dann kann eine Verarbeitung der Steuerbefehle I_{S} in dem Datenverarbeitungsgerät erfolgen, welche die vom Benutzer über die Steuerbefehle I_{S} vorgenommene Eingabe in für das Infotainment-System verständliche Anweisungen I_{A} übersetzt.

Daten bzw. Informationen können von einem Transponder des Bewegungserfassungsgeräts, z. B. einem BLE-Transponder, über die erste Kommunikationsschnittstelle, z. B. eine BLE-Schnittstelle, an das mobile Datenverarbeitungsgerät übertragen werden. Das mobile Datenverarbeitungsgerät kann Daten/Informationen über die erste Kommunikationsschnittstelle mittels eines ersten Transponders, z. B. eines BLE-Transponders, empfangen. Ferner kann das mobile Datenverarbeitungsgerät Daten/Informationen mittels eines zweiten Transponders über die zweite Kommunikationsschnittstelle an das Infotainment-System übertragen. Das Infotainment-System kann Daten/Informationen über die zweite Kommunikationsschnittstelle mittels eines Transponders empfangen.

Ein Datenverarbeitungsprogramm (Software) des mobilen Datenverarbeitungsgeräts, beispielsweise bezeichnet als Applikation, kann empfangene Steuerbefehle I_{S} auswerten und in Anweisungen I_{A} zur Steuerung des Infotainment-Systems übersetzen. Es wird dabei jeweils mindestens ein Steuerbefehl I_{S} in mindestens eine Anweisung I_{A} übersetzt, also m Steuerbefehle I_{S} in n Anweisungen I_{A}, wobei 1<=m und 1<=n.

Bewegungen des Nutzers bzw. Fahrzeugführers können von dem Bewegungserfassungsgerät erfasst, interpretiert und Steuerbefehlen I_{S} zugeordnet werden. Diese Steuerbefehle I_{S} können von einem Transponder des Bewegungserfassungsgeräts, z. B. einem BLE-Transponder, über die erste Kommunikationsschnittstelle, z. B. eine BLE-Schnittstelle, an das mobile Datenverarbeitungsgerät übertragen werden. Das mobile Datenverarbeitungsgerät kann Steuerbefehle I_{S} über die erste Kommunikationsschnittstelle mittels eines ersten Transponders, z. B. eines BLE-Transponders, empfangen. Ferner kann das mobile Datenverarbeitungsgerät die Steuerbefehle I_{S} in Anweisungen I_{A} übersetzen und mittels eines zweiten Transponders (kann physikalisch auch der gleiche Transponder wie der erste Transponder sein) über die zweite Kommunikationsschnittstelle an das Infotainment-System übertragen. Das Infotainment-System kann die Anweisungen I_{A} über die zweite Kommunikationsschnittstelle mittels eines Transponders empfangen. Die empfangenen Anweisungen I_{A} können durch ein Programm des Infotainment-Systems erkannt und ausgewertet werden. Entsprechend den Anweisungen I_{A} können von dem Infotainment-System die von dem Nutzer gewünschten Aktionen, basierend auf den empfangenen Anweisungen I_{A}, durchgeführt werden. Die Verarbeitung von Anweisungen I_{A} kann von einem Eingabe-Ereignis-Bearbeitungs-Prozess in dem Infotainment-System durchgeführt werden.

Dementsprechend kann das System bei der Steuerung des Infotainment-Systems über Bewegungen eines Nutzers/Fahrzeugführers durch das Bewegungserfassungsgerät zum Einsatz kommen. Durch den Einsatz des mobilen Datenverarbeitungsgeräts als Netzknoten kann das Infotainment-System durch das Bewegungserfassungsgerät gesteuert werden, ohne dass Änderungen an den Kommunikationsschnittstellen der beiden zuletzt genannten Komponenten erfolgen müssen.

Bevorzugt ist die erste Kommunikationsschnittstelle dazu eingerichtet, ein Bluetooth-Low-Energy-Protokoll zu verwenden.

Weiter kann bevorzugt die zweite Kommunikationsschnittstelle dazu eingerichtet sein, ein Bluetooth- oder Wireless-Fidelity- oder USB-Protokoll zu verwenden.

Durch das mobile Datenverarbeitungsgerät kann das Bewegungserfassungsgerät mittelbar mit dem Infotainment-System kommunizieren, obwohl das Bewegungserfassungsgerät und das Infotainment-System unterschiedliche Kommunikationsschnittstellen nutzen. Das Infotainment-System kann somit durch das Bewegungserfassungsgerät mit dem mobilen Datenverarbeitungsgerät als Netzknoten gesteuert werden.

Die Steuerbefehle I_{S} sind vorzugsweise zum Navigieren und Auswählen von Funktionen und/oder Informationen des Infotainment-Systems vorgesehen. Dabei bleibt es dem Infotainment-System überlassen, diese Steuerbefehle auch auf eine Bildschirm-Integration weiterer an das Infotainment-System angeschlossener Geräte anzuwenden, etwa gemäß Apple's carplay, Android Auto, Mirrorlink usw..

Folglich kann mittels des erfindungsgemäßen Systems ein Nutzer durch Bewegungen und/oder Gesten, z. B. mit seinen Händen, das Infotainment-System eines Fahrzeugs steuern (Steuerbewegung). Dazu braucht der Nutzer seinen Blick nicht von der Straße bzw. dem Verkehrsgeschehen abwenden, um nach Knöpfen oder Ähnlichem am Armaturenbrett des Fahrzeugs zu suchen, sondern kann durch einfache Bewegungen/Gesten die gewünschte Aktion in dem Infotainment-System auslösen oder eine gewünschte Information aus dem Infotainment-System abrufen.

Speziell für den Fernzugriff über drahtgebundene oder drahtlose Kommunikationsschnittstellen kann das Infotainment-System eine Schnittstelle mit Anweisungen I_{A} zur Verfügung stellen. Diese Schnittstelle kann auf abstrakter Ebene mindestens die Anweisungen "Nächster Eintrag"/"nach oben" und "voriger Eintrag"/"nach unten" zwecks Navigation in Listen enthalten. Es können auch weitere Anweisungen zum Navigieren bezüglich Richtungen wie "links", "rechts", "nach oben", "nach unten" sowie feinere Unterteilungen vorgesehen sein, um auch in verschachtelten Listen, Baumstrukturen und z. B. auf Kartendarstellungen navigieren zu können. Ferner kann neben der Richtungsanweisung auch eine Schrittweitenangabe, in der Regel abhängig von der Intensität der Eingabebewegung erfolgen. So kann z. B. die Geschwindigkeit eines schnellen Vorlaufs etwa durch die Intensität der Eingabebewegung, beispielsweise Bewegungsgeschwindigkeit, Bewegungsradius, etc., regelbar sein. Insgesamt können diese Richtungsanweisungen sich auch auf den 3-dimensionalen Raum beziehen, wenn z. B. auch auf einem Bildschirm 3-dimensionale Objekte visuell angezeigt werden, durch die navigiert werden soll.

Die zweite Kommunikationsschnittstelle kann bevorzugt dazu eingerichtet sein, Rückkopplungsantworten I_{RA} von dem Infotainment-System an das mobile Datenverarbeitungsgerät zu übertragen. Das mobile Datenverarbeitungsgerät kann bevorzugt dazu eingerichtet sein, seine Rückkopplungsantworten I_{RA} in Antworten I_{R} an das Bewegungserfassungsgerät oder Rückmeldungen I_{RM}, I_{RM}', ... an optionale weitere Ausgabegeräte zu übersetzen. Die erste Kommunikationsschnittstelle kann bevorzugt dazu eingerichtet sein, die Antworten I_{R} von dem mobilen Datenverarbeitungsgerät an das Bewegungserfassungsgerät zu übertragen.

Ferner kann das Bewegungserfassungsgerät den Anwender bezüglich der erhaltenen Antwort I_{R} "sensorisch" informieren, alternativ oder additiv kann auch ein separates, vom Bewegungserfassungsgerät vollkommen unabhängiges Ausgabegerät diese "sensorische" Information an den Nutzer liefern.

Das Datenverarbeitungsprogramm des mobilen Datenverarbeitungsgeräts, z. B. eine App, kann empfangene Rückkopplungsantworten I_{RA} auswerten und in Antworten I_{R} an das Bewegungserfassungsgerät bzw. Rückmeldungen I_{RM} an das oder die Ausgabegeräte übersetzen. Der Begriff "Rückkopplungsantworten I_{RA}" bezeichnet hier Signale, die als Reaktion auf Anweisungen von dem Infotainment-System ausgesendet werden. Die Antworten I_{R} bzw. die optionalen Rückmeldungen I_{RM}, I_{RM}" ...können z. B. als Bestätigung für erfolgreich übersetzte und ausgeführte Befehle versendet werden. Die übersetzten Antworten I_{R} können von verschiedenen Quellen, bevorzugt jedoch von dem Infotainment-System, stammen. Dabei können die Antworten I_{R} auch qualifizierte Ablehnungen, etwa durch Anwenderfehler, bedeuteten.

Damit der Nutzer bzw. Fahrzeugführer seine Aufmerksamkeit nicht von dem Verkehrsgeschehen abwenden muss, um eine erfolgreiche Durchführung des mit einer Geste verbundenen Befehls durch das Infotainment-System zu überprüfen, können die Antworten I_{R}, welche von dem mobilen Datenverarbeitungsgerät an das Bewegungserfassungsgerät übertragen werden, in Rücckopplungsaktionen, wie beispielsweise ein Vibrieren oder einen Bestätigungston des Bewegungserfassungsgeräts, umgesetzt werden. Alternativ oder additiv können auch Ausgabegeräte, die mit dem Bewegungserfassungsgerät selber nicht verbunden sind, ein solches sensorisches Bestätigungssignal, beispielsweise ein Vibrieren, aufgrund einer entsprechenden Rückmeldung vom mobilen Datenverarbeitungsgerät, erzeugen. Das Infotainment-System kann dazu positive oder negative Rückkopplungsantworten I_{RA}, basierend auf erfolgreicher oder erfolgloser Ausführung einer Anweisung I_{A} über die zweite Kommunikationsschnittstelle an das mobile Datenverarbeitungsgerät übertragen. Das mobile Datenverarbeitungsgerät übersetzt die Rückkopplungsantworten I_{RA} in Antworten I_{A} zur Übermittlung an das Bewegungserfassungsgerät bzw. in Rückmeldungen I_{RM} zur Übermittlung an die alternativen/additiven Ausgabegeräte und überträgt diese über die erste Kommunikationsschnittstelle bzw. die weiteren Kommunikationsschnittstellen.

Es können ferner optional ein oder mehrere Ausgabegeräte an das mobile Datenverarbeitungsgerät bezüglich einer weiteren Kommunikationsschnittstelle, nicht unbedingt physikalisch, angeschlossen werden, die eine oder mehrere Rückmeldungen I_{RM}, I_{RM}', ... eines Steuerbefehls I_{S}, etwa dessen Bestätigung oder Ablehnung, sensorisch ablehnen rückmelden, z. B. durch verschiedene Arten von Vibrationen.

Es kann die Bestätigung oder Ablehnung der Eingabe (Steuerbefehl Iₛ) per sensorischer Rückmeldung z. B. durch Vibration in einem als "Wearable" ausgeprägten Ausgabegerät empfangen werden, das mittelbar mit dem Infotainment-System kommuniziert, obwohl auch hier Ausgabegerät und Infotainment-System unterschiedliche Kommunikationsschnittstellen nutzen.

Die Rückeldungen I_{RM}, I_{RM}', ... an die optionalen, vom Bewegungserfassungsgerät vollkommen unabhängigen Ausgabegeräte können eine Bestätigung des Kommandos oder aber auch dessen Ablehnung enthalten und somit zu verschiedenen Ausgabereaktionen führen, die "sensorisch" unterscheidbar sein sollten, wie z. B. unterschiedliches Vibrieren.

Da nicht in allen Fällen durch die angesteuerte Funktion bzw. das angesteuerte Gerät selbst eine Rückmeldung (Feedback) erfolgt (beispielsweise bei einem Senderwechsel des Radios ein hörbares Feedback), können zusätzliche Konzepte einer Weiterleitung einer Bestätigung der Ausführung einer Operation unterstützt werden. Eine solche Bestätigung kann im einfachsten Fall ein Piep-Ton beim Abspeichern eines Senders sein. Es sind hierbei auch weitere Formen eines Feedbacks bzw. einer Quittierung möglich, die beispielsweise sensorisch erfolgen können. Dazu können Ausgabegeräte, also Geräte die einen sensorischen Effekt bewirken, sowohl fest im Fahrzeug verbaut sein, z. B. eine Luftdüse oder Ähnliches, als auch als "Wearable" am Körper des Nutzers getragen werden, beispielsweise ein elastisches Band. Die mittels der Ausgabegeräte ausgegebenen Feedbacks können sowohl eine Bestätigung wie auch eine Ablehnung einer Eingabe, also eines Steuerbefehls I_{S}, sein. Zum Beispiel kann besagtes elastisches Band sich bei Bestätigung eines Steuerbefehls I_{S} aufgrund einer entsprechenden Rückmeldung I_{RM} für einen Moment etwas zusammenziehen oder eine spezielle Vibration bewirken und im Ablehnungsfall eine dementsprechend andere Rückmeldung abgeben. Diese Ausgabegeräte können an das Datenverarbeitungsgerät sowohl über drahtlose wie auch kabelgebundene Kommunikationsschnittstellen angebunden werden. Insbesondere werden "Wearables" als Ausgabegeräte über BLE-Transponder angeschlossen und nicht fest mit dem mobilen Datenverarbeitungsgerät oder dem Infotainment-System verbunden.

Diese Form des sensorischen Feedbacks beeinträchtigt den Fahrer nicht in seiner Aufmerksamkeit auf den Straßenverkehr durch Sehen und Hören.

Die Ausgabegeräte die eine Bestätigung eines Kommandos (Steuerbefehl I_{S}) anzeigen sind in der Regel so gewählt, dass sie den Fahrer nicht ablenken. Diese können z. B. Bänder sein, die sich kurz zusammenziehen, Gebläse, die kurz einen warmen oder kalten Luftstrom auf z. B. die Hand des Fahrers lenken oder gar elektrische Bauteile, die einen Reizstromeffekt ausführen. Insgesamt also ein sensorisches Feedback, was die Aufmerksamkeit des Fahrers nicht durch z. B. zusätzliche audiovisuelle Reize beeinträchtigt.

Das mobile Datenverarbeitungsgerät kann dazu eingerichtet sein Rückkopplungsantworten I_{RA} alternativ oder additiv zu den Antworten I_{A} in jeweils ein oder mehrere Rückmeldungen I_{RM}, I_{RM}', ... an ein oder mehrere Ausgabegeräte zu übersetzen und über ein oder mehrere weitere Kommunikationsschnittstellen zu übertragen, wobei die eine oder die mehreren Rückmeldungen I_{RM}, I_{RM}', ... durch das eine oder die mehreren Ausgabegeräte in sensorisches Feedback, wie beispielsweise Vibration, Luftstrom, Reizstrom, audiovisuelles Feedback, haptisches Feedback, etc., umgesetzt werden.

Außerdem soll die Verwendung eines mobilen Datenverarbeitungsgeräts zum Übermitteln von Steuerbefehlen I_{S} eines Bewegungserfassungsgeräts an ein Infotainment-System in einem Fahrzeug beschrieben werden. In Form von Anweisungen I_{A} werden die von dem Bewegungserfassungsgerät gesendeten Steuerbefehle I_{S} über eine erste Kommunikationsschnittstelle von dem mobilen Datenverarbeitungsgerät empfangen. Ferner werden die empfangenen Steuerbefehle I_{S} von dem mobilen Datenverarbeitungsgerät in die Anweisungen I_{A} an das Infotainment-System übersetzt und die übersetzten Anweisungen I_{A} von dem mobilen Datenverarbeitungsgerät über eine zweite Kommunikationsschnittstelle an das Infotainment-System gesendet. Dies entspricht einer Verwendung eines mobilen Datenverarbeitungsgeräts in dem weiter oben beschriebenen System.

Das Bewegungserfassungsgerät und das Infotainment-System können mit dem mobilen Datenverarbeitungsgerät durch entsprechende manuelle Eingaben des Nutzers am mobilen Datenverarbeitungsgerät und/oder dem Bewegungserfassungsgerät bzw. dem Infotainment-System miteinander gekoppelt werden. Koppeln bedeutet in diesem Zusammenhang, dass die Komponenten miteinander bekannt gemacht werden und nach erfolgreicher Kopplung über einen Kommunikationskanal, hier also die erste oder zweite Kommunikationsschnittstelle, Daten bzw. Informationen austauschen können. Die Kopplungen können auch automatisch, ohne manuelle Eingaben des Nutzers, erfolgen. Dazu kann ein Programm des mobilen Datenverarbeitungsgeräts, z. B. eine App, automatisch nach dem Bewegungserfassungsgerät und/oder dem Infotainment-System suchen und eine Kopplung automatisch herbeigeführt werden, sobald die Suche erfolgreich ist. Wie bei drahtlosen Verbindungen üblich, kann eine Verschlüsselung und/oder ein passwortgeschütztes Koppeln erfolgen.

Genauso können optional ein oder mehrere Ausgabegeräte mit dem mobilen Datenverarbeitungsgerät durch entsprechende manuelle Eingaben des Nutzers am mobilen Datenverarbeitungsgerät und/oder dem entsprechenden Ausgabegerät miteinander gekoppelt werden. Wie im vorigen Abschnitt beschrieben können die Kopplungen auch automatisch erfolgen.

Darüber hinaus beschrieben werden soll ein mobiles Datenverarbeitungsgerät, umfassend ein Modul, welches dazu eingerichtet ist, Steuerbefehle I_{S} über eine erste Kommunikationsschnittstelle von einem Bewegungserfassungsgerät zu empfangen, die empfangenen Steuerbefehle I_{S} in Anweisungen I_{A} an ein Infotainment-System zu übersetzen und die übersetzten Anweisungen I_{A} über eine zweite Kommunikationsschnittstelle an das Infotainment-System zu senden. Dieses Gerät ist nicht Teil der Erfindung.

Das Modul ist vorzugsweise ein Programm bzw. ein Software-Programm, welches auf dem mobilen Datenverarbeitungsgerät installiert ist. Das Modul kann zum Empfang der Steuerbefehle I_{S} beispielsweise einen ersten Transponder (z. B. BLE-Transponder) für die erste Kommunikationsschnittstelle des mobilen Datenverarbeitungsgeräts abfragen. Diese Empfangsfunktionalität kann auch als eigenständige Applikation, die mit dem Modul verbunden ist, ausgeführt sein. Ist ein Steuerbefehl I_{S} empfangen worden, wird dieser von dem Modul ausgewertet und überprüft, ob es sich um einen gültigen Steuerbefehl I_{S} handelt. Das Modul erkennt die Richtung des Steuerbefehls I_{S}, also ob dieser für das Infotainment-System bestimmt ist. Im Anschluss wird mindestens ein Steuerbefehl I_{S} von dem Modul in mindestens eine Anweisung I_{A} an das Infotainment-System übersetzt. Es kann unter Gesichtspunkten einer Flusskontrolle sinnvoll zu sein, die Weitergabe von Anweisungen I_{A} an das Infotainment-System geregelt zu gestalten, insbesondere dann, wenn Rückkopplungsantworten I_{RA} vom Infotainment-System zum mobilen Datenverarbeitungsgerät unterstützt werden. Somit gibt es Situationen, in denen ein Steuerbefehl I_{S} noch im mobilen Datenverarbeitungsgerät wartet und dort schon ein weiterer Steuerbefehl I_{S} empfangen wird. In diesem Fall können die beiden unter gewissen Umständen gemeinsam übersetzt werden, wenn etwa beide Steuerbefehle eine Navigation in die gleiche Richtung beinhalten und nur die Schrittweite erhöht werden muss, etwa statt zwei Befehle bezüglich "Verschiebung um eine Position nach oben" nur noch ein Befehl bezüglich "Verschiebung um zwei Positionen nach oben". Damit leistet das mobile Datenverarbeitungsgerät auch eine Vorverarbeitung und Pufferung. Die Anweisung I_{A} kann von dem Programm an das Infotainment-System beispielsweise über einen zweiten Transponder (z. B. WiFi-Transponder) für die zweite Kommunikationsschnittstelle des mobilen Datenverarbeitungsgeräts übertragen werden. Diese Übertragungsfunktionalität kann auch als eigenständige Applikation, die mit dem Modul verbunden ist, ausgeführt sein.

Durch das Modul kann das mobile Datenverarbeitungsgerät effizient als Netzknoten zwischen dem Bewegungserfassungsgerät und dem Infotainment-System realisiert werden. Es müssen weder die Kommunikationsschnittstelle des Bewegungserfassungsgeräts noch die Kommunikationsschnittstelle des Infotainment-Systems in irgendeiner Weise angepasst werden. Die besagten Komponenten können mittels des erfindungsgemäßen mobilen Datenverarbeitungsgeräts mit dem Programm als Netzknoten sofort (out of the box) und ohne Anpassungen (plug and play) miteinander verwendet werden.

Das mobile Datenverarbeitungsgerät kann ein Betriebssystem, z. B. Android, iOS, Windows mobile, etc., umfassen, welches als Plattform für die Ausführung des erfindungsgemäßen Programms dienen kann. Die Applikation zur Realisierung der Empfangsfunktionalität und/oder der Übertragungsfunktionalität kann von dem Betriebssystem bereitgestellt werden und von dem Programm des mobilen Datenverarbeitungsgeräts verwendet werden.

Weiter beschrieben werden soll ein Verfahren zur Übermittlung von Steuerbefehlen I_{S} von einem Bewegungserfassungsgerät an ein Infotainment-System in einem Fahrzeug, umfassend mindestens die Schritte:
a) Senden der Steuerbefehle I_{S} über eine erste Kommunikationsschnittstelle an ein mobiles Datenverarbeitungsgerät,
b) Übersetzen der Steuerbefehle I_{S} in Anweisungen I_{A} in dem mobilen Datenverarbeitungsgerät und
c) Senden der Anweisungen I_{A} von dem mobilen Datenverarbeitungsgerät über eine zweite Kommunikationsschnittstelle an das Infotainment-System.

Das Bewegungserfassungsgerät kann zum Senden der Steuerbefehle I_{S} über die erste Kommunikationsschnittstelle (z. B. BLE-Schnittstelle) einen Transponder (z. B. BLE-Transponder) nutzen und das mobile Datenverarbeitungsgerät kann zum Empfangen der Steuerbefehle I_{S} einen ersten Transponder (z. B. BLE-Transponder) nutzen. Zum Übersetzen der Steuerbefehle I_{S} wird von dem Programm des mobilen Datenverarbeitungsgeräts mindestens ein empfangener Steuerbefehl I_{S} ausgewertet und in mindestens eine Anweisung I_{A} übersetzt. Dabei kann eine Logik- und Längen-Konvertierung stattfinden, bei der beispielsweise ein Steuerbefehl I_{S} der Länge 8-bit aus einer Steuerlogik des Bewegungserfassungsgeräts in eine Anweisung I_{A} der Länge 4-bit aus einer Anweisungslogik des Infotainment-Systems konvertiert wird. Es ist jedoch auch möglich, dass die Länge und die Logik der Steuerbefehle I_{S} und der entsprechenden Anweisungen I_{A} identisch sind und die Steuerbefehle I_{S} den Anweisungen I_{A} entsprechen.

Das erfindungsgemäße Verfahren ermöglicht eine problemlose Kommunikation zwischen dem Bewegungserfassungsgerät und dem Infotainment-System, sodass das Infotainment-System durch das Bewegungserfassungsgerät gesteuert werden kann.

In dem Verfahren zur Übermittlung können in dem Schritt des Übersetzens auch mehrere Steuerbefehle I_{S} zusammen in eine oder mehrere Anweisungen I_{A} übersetzt werden.

Die in den vorherigen Abschnitten beschriebenen Geräte, Komponenten und Verfahren können auch für eine Kommunikation in entgegengesetzter Richtung, also die Übertragung und Übersetzung von Rückkopplungsantworten I_{RA} von dem Infotainment-System in Antworten I_{R} an das Bewegungserfassungsgerät, sowie optional als Rückmeldungen I_{RM}, I_{RM}', ... an ein oder mehrere Ausgabegeräte, eingesetzt werden. Die dabei verwendeten Funktionalitäten und Eigenschaften sind analog zu den zuvor beschriebenen. Die im Zusammenhang mit dem System erläuterten besonderen Vorteile und Ausführungsbeispiele sind in analoger Weise auf die beschriebene Verwendung, das beschriebene mobile Datenverarbeitungsgerät und das beschriebene Verfahren übertragbar. Gleiches gilt für die im Zusammenhang mit Verwendung, Datenverarbeitungsgerät und Verfahren beschriebenen Vorteile und Ausführungsbeispiele, die jeweils ebenfalls für alle beschriebenen Systeme, Verwendungen, Verfahren und Geräte anwendbar und übertragbar sind.

Die Erfindung sowie das technische Umfeld werden nachfolgend anhand der Figuren näher erläutert. Es ist darauf hinzuweisen, dass die Figuren eine besonders bevorzugte Ausführungsvariante der Erfindung zeigen, diese jedoch nicht darauf beschränkt ist. Dabei sind gleiche Bauteile und Funktionen in den Figuren mit denselben Bezugszeichen versehen. Es zeigen beispielhaft und schematisch:
- Fig. 1: ein erfindungsgemäßes System.
- Fig. 2: einen Ablauf bei einer erfindungsgemäßen Verwendung eines mobilen Datenverarbeitungsgeräts als Netzknoten.

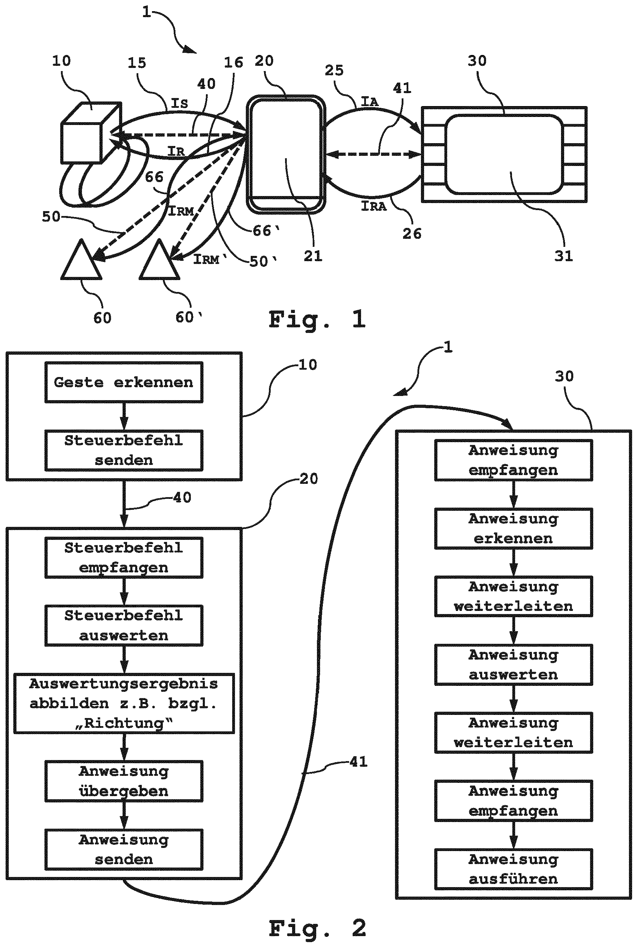

Fig. 1 zeigt ein Bewegungserfassungsgerät 10, hier ein Armband zur Erfassung von Muskelkontraktionen im Unterarm eines Nutzers (Myo-Armband). Steuerbefehle I_{S} 15 werden von dem Bewegungserfassungsgerät 10 aus erkannten Bewegungen und/oder Gesten eines Nutzers generiert. Das Bewegungserfassungsgerät 10 sendet die Steuerbefehle I_{S} 15 und empfängt Antworten I_{R} 16. Sowohl die Steuerbefehle I_{S} 15 als auch die Antworten I_{R} 16 werden über eine erste Kommunikationsschnittstelle 40 übertragen. Die erste Kommunikationsschnittstelle 40 nutzt hier ein Bluetooth-Low-Energy-Protokoll (BLE-Protokoll). Über die erste Kommunikationsschnittstelle 40 ist das Bewegungserfassungsgerät 10 mit einem mobilen Datenverarbeitungsgerät 20 kommunikativ verbunden. Das mobile Datenverarbeitungsgerät 20 ist hier ein Smartphone. Das mobile Datenverarbeitungsgerät umfasst einen Bildschirm 21. Auf dem Bildschirm 21 können unter anderem Informationen bezüglich Kopplung, bestehender Verbindungen und der gleichen angezeigt werden. Das mobile Datenverarbeitungsgerät sendet die Antworten I_{R} 16 an das Bewegungserfassungsgerät 10 und empfängt die Steuerbefehle I_{S} 15 von dem Bewegungserfassungsgerät 10 über die erste Kommunikationsschnittstelle 40. Anweisungen I_{A} 25 werden von dem mobilen Datenverarbeitungsgerät 20 aus den Steuerbefehlen I_{S} 15 generiert. An dieser Stelle geschieht eine Abbildung auf das von einem Infotainment-System 30 vorgegebene API für die unterstützten Eingabeoperationen. Beispielsweise können sich die aktuell unterstützten Richtungsoperationen von einem Infotainment-System zum anderen Infotainment-System unterscheiden, z. B. in Bezug auf Granularität der Richtung (8 Richtungen oder 12 Richtungen) oder in Bezug auf Intensität oder Schrittweite in einer Richtung. Die Antworten I_{R} 16 werden von dem mobilen Datenverarbeitungsgerät 20 aus Rückkopplungsantworten I_{RA} 26 generiert. Das mobile Datenverarbeitungsgerät sendet die Anweisungen I_{A} 25 und empfängt die Rückkopplungsantworten I_{RA} 26. Sowohl die Anweisungen I_{A} 25 als auch die Rückkopplungsantworten I_{RA} 26 werden über eine zweite Kommunikationsschnittstelle 41 übertragen. Die zweite Kommunikationsschnittstelle 41 nutzt hier ein Wireless-Fidelity-Protokoll (WiFi-Protokoll). Über die zweite Kommunikationsschnittstelle 41 ist das mobile Datenverarbeitungsgerät 20 mit einem Infotainment-System 30 kommunikativ verbunden. Das Infotainment-System 30 ist hier beispielhaft als ein Kombinationssystem aus Navigationssystem, DVD-Player, Radio, Bordcomputer und Mobilfunkeinheit dargestellt. Das Infotainments-System 30 kann auch eine beliebige Auswahl der genannten Komponenten (Navigationssystem, DVD-Player, Radio, Bordcomputer, Mobilfunkeinheit) umfassen. Das Infotainment-System 30 umfasst einen berührungssensitiven Bildschirm (Touchscreen) 31. Auf dem Bildschirm 31 können unter anderem Informationen bezüglich Kopplung, bestehender Verbindungen, und dergleichen, sowie Informationen aus dem Infotainment-System 30 (Straßenkarte mit Navigationshinweisen/-visualisierungen, DVD-Filme/- Tracks, Radiosender, Informationen aus dem Bordcomputer, Informationen über das angeschlossene Smartphone, etc.) angezeigt werden. Ferner zeigt Figur 1 die optionalen Ausgabegeräte 60, 60', die zu dem mobilen Datenverarbeitungsgerät 20 jeweils eine weitere Kommunikationsschnittstelle 50, 50' haben. Bei Erhalt z. B. einer Bestätigungsmeldung in Form einer Rückkopplungsantwort I_{RA} 26 über die Kommunikationsschnittstelle 41 sendet das mobile Datenverarbeitungsgerät 20 über die Kommunikationsschnittstellen 50, 50' jeweils Rückmeldungen I_{RM} 66, I_{RM}'66'. Es können aber auch Ablehnungen des Kommandos auf diese Weise weiter gegeben werden.

Das Bewegungserfassungsgerät 10 sendet Steuerbefehle I_{S} 15 an das mobile Datenverarbeitungsgerät 20 und empfängt Antworten I_{R} 16. Das Infotainment-System 30 sendet die Rückkopplungsantworten I_{RA} 26 an das mobile Datenverarbeitungsgerät 20 und empfängt die Anweisungen I_{A} 25 von dem mobilen Datenverarbeitungsgerät 20 über die zweite Kommunikationsschnittstelle 41. Hierbei kann das mobile Datenverarbeitungsgerät 20 Anpassungen im Sinne einer Flusskontrolle zum Infotainment-System 30 hin leisten.

Die Anweisungen I_{A} 25 werden von dem Infotainment-System 30 in konkrete Aktionen umgesetzt und dadurch Informationen ausgegeben (Ton und/oder Bild) oder als Funktionen (z. B. Navigieren in einem Menü, Wechseln von Tracks oder Sendern und dergleichen) ausgeführt. Als Bestätigung für eine erfolgreiche Ausführung von mindestens einer Anweisung I_{A} 25 sendet das Infotainment-System in einer Rückkopplung (Feedback) mindestens eine Rückkopplungsantwort I_{RA} 26 an das mobile Datenverarbeitungsgerät 20 über die zweite Kommunikationsschnittstelle 41. Die Antwort I_{R} 16 bzw. die Rückkopplungsantwort I_{RA} 26 kann unter mindestens vier Aspekten ausgewertet werden:
1. Die Rückkopplungsantwort I_{RA} 26 kann der lokalen Flusskontrolle im mobilen Datenverarbeitungsgerät 20 bezüglich des Absendens von Anweisungen I_{A} 25 an das Infotainment-System 30 dienen.
2. Die Antwort I_{R} 16 kann der lokalen Flusskontrolle im Bewegungserfassungsgerät 10 bezüglich des Absendens von Anweisungen I_{S} 15 an das mobile Datenverarbeitungsgerät 20 dienen.
3. Die Rückkopplungsantwort I_{RA} 26 kann das Absenden der Antwort I_{R} 16 zum Bewegungserfassungsgerät 10 zwecks Ausgabe eines sensorischen Effekts, z. B. bezüglich einer Bestätigung oder Ablehnung eines Steuerbefehls I_{S} 15, anstoßen.
4. Die Rückkopplungsantwort I_{RA} 26 kann das Absenden von Rückmeldungen I_{RM} 66, I_{RM}' 66' zu den Ausgabegeräten 60, 60' zwecks Ausgabe von sensorischen Effekten, z. B. bezüglich einer Bestätigung oder Ablehnung eines Steuerbefehls I_{S} 15, anstoßen.

Fig. 2 zeigt den Ablauf bei der Steuerung des Infotainment-Systems 30 durch das Bewegungserfassungsgerät 10 über das mobile Datenverarbeitungsgerät 20. Von dem Bewegungserfassungsgerät 10 wird eine Bewegung und/oder Geste erkannt. Die erkannte Bewegung und/oder Geste wird in mindestens einen Steuerbefehl I_{S} 15 umgewandelt. Der Steuerbefehl I_{S} 15 wird beispielsweise durch einen BLE-Transceiver des Bewegungserfassungsgeräts 10 über die erste Kommunikationsschnittstelle 40 an das mobile Datenverarbeitungsgerät 20 übertragen. Das mobile Datenverarbeitungsgerät 20 empfängt den Steuerbefehl I_{S} 15 beispielsweise über einen BLE-Transceiver des mobilen Datenverarbeitungsgeräts 20 mit einer BLE-Applikation des mobilen Datenverarbeitungsgeräts 20. Der Steuerbefehl I_{S} 15 wird von einem Programm auf dem mobilen Datenverarbeitungsgerät 20 ausgewertet und dabei in eine Anweisung I_{A} 25 übersetzt. Es wird anschließend von dem Programm der Steuerbefehl I_{S} 15 bzw. die Anweisung I_{A} 25, also das Auswertungsergebnis, abgebildet, beispielsweise auf Anweisung bezüglich "Richtung" und/oder "Intensität". Dabei werden bereits wartende Anweisungen I_{A}, die noch nicht weiterverarbeitet wurden, bei der Abbildung mit berücksichtigt, so dass gegebenen Falls bei zwei oder mehreren gleichen Anweisungen I_{A} diese in eine einzige Anweisung I_{A} mit entsprechend angepasster Schrittweite abgebildet werden. Die Anweisung I_{A} 25 wird an eine WiFi-Applikation des mobilen Datenverarbeitungsgeräts 20 übergeben und beispielsweise durch einen WiFi-Transceiver des mobilen Datenverarbeitungsgeräts 20 mit einer WiFi-Applikation des mobilen Datenverarbeitungsgeräts 20 über die zweite Kommunikationsschnittstelle 41 an das Infotainment-System 30 übertragen. Das Infotainment-System 30 empfängt die Anweisung I_{A} 25 beispielsweise über einen WiFi-Transceiver des Infotainment-Systems 30 mit einer WiFi-Applikation des Infotainment-Systems 30. Die Anweisung I_{A} 25 wird von dem Infotainment-System 30 erkannt und an einen Eingabe-Ereignis-Bearbeitungsprozess weitergleitet. Der Eingabe-Ereignis-Bearbeitungsprozess empfängt die Anweisung I_{A} 25 und wertet diese bezüglich der zu vollziehenden Aktion (Funktionalität) aus. Der Eingabe-Ereignis-Bearbeitungs-Prozess leitet die Anweisung I_{A} 25 in einer lokalen Darstellung einer generischen Schnittstelle für Anweisung I_{A} 25 (Eingabeereignis) an einen entsprechenden verarbeitenden Prozess weiter. Der verarbeitende Prozess, beispielsweise ein Applikationsprozess zuständig für Media, erhält das Eingabeereignis (korrespondierend zu der Anweisung I_{A} 25), z. B. "next track", welches zum Wechseln des aktuellen Musik-Titels zum Darauffolgenden führt. Dabei kann von dem Applikationsprozess nicht unterschieden werden, ob das Eingabeereignis von dem Bewegungserfassungsgerät oder etwa einer Eingabe über den berührungssensitiven Bildschirm 31 von dem Infotainment-System selbst stammt. Auch eine Steuerung des Infotainment-Systems über Eingaben am mobilen Datenverarbeitungsgerät 20 ist möglich. Schließlich wird von dem Infotainment-System 30 das Eingabeereignis und somit die Anweisung I_{A} 25 ausgeführt und der nächste Musik-Titel angespielt.

Ein analoger Ablauf der Kommunikation zwischen Infotainment-System 30 und Bewegungserfassungsgerät 10 bzw. zu den optionalen Ausgabegeräten 60, 60' über das mobile Datenverarbeitungsgerät 20 ergibt sich für die bereits erwähnte Rückkopplung zur Bestätigung von erfolgreich ausgeführten Anweisungen I_{A} 25 durch Erkennung von Gesten.

## Patentansprüche

1. System (1), bestehend aus einem Fahrzeug mit Infotainment-System (30), einem mobilen Datenverarbeitungsgerät (20) und einem Bewegungserfassungsgerät (10), wobei eine erste Kommunikationsschnittstelle (40) dazu eingerichtet ist, Steuerbefehle I_{S} (15) von dem Bewegungserfassungsgerät (10) an das mobile Datenverarbeitungsgerät (20) zu übertragen, das mobile Datenverarbeitungsgerät (20) dazu eingerichtet ist, die Steuerbefehle I_{S} (15) in Anweisungen I_{A} (25) an das Infotainment-System (30) zu übersetzen, und eine zweite Kommunikationsschnittstelle (41) dazu eingerichtet ist, die Anweisungen I_{A} (25) von dem mobilen Datenverarbeitungsgerät (20) an das Infotainment-System (30) zu übertragen.

2. System (1) nach Anspruch 1, wobei das mobile Datenverarbeitungsgerät (20) dazu eingerichtet ist mehrere Steuerbefehle Is (15) in eine oder mehrere Anweisungen I_{A} (25) zusammenzufassen.

3. System (1) nach einem der vorherigen Ansprüche, wobei die erste Kommunikationsschnittstelle (40) dazu eingerichtet ist, ein Bluetooth-Low-Energy-Protokoll zu verwenden, und die zweite Kommunikationsschnittstelle (41) dazu eingerichtet ist, ein Bluetooth- oder Wireless-Fidelity- oder USB- Protokoll oder eine Radio-Übertragung zu verwenden.

4. System (1) nach einem der vorherigen Ansprüche, wobei die Steuerbefehle I_{S} (15) zum Navigieren und Auswählen von Funktionen und/oder Informationen des Infotainment-Systems (30) vorgesehen sind.

5. System (1) nach einem der vorherigen Ansprüche, wobei die zweite Kommunikationsschnittstelle (41) dazu eingerichtet ist, Rückkopplungsantworten I_{RA} (26) von dem Infotainment-System (30) an das mobile Datenverarbeitungsgerät (20) zu übertragen, das mobile Datenverarbeitungsgerät (20) dazu eingerichtet ist, Rückkopplungsantworten I_{RA} (26) in Antworten I_{R} (16) an das Bewegungserfassungsgerät (10) zu übersetzen und die erste Kommunikationsschnittstelle (40) dazu eingerichtet ist, die Antworten I_{R} (16) von dem mobilen Datenverarbeitungsgerät (20) an das Bewegungserfassungsgerät (10) zu übertragen.

6. System (1) nach Anspruch 4 wobei das mobile Datenverarbeitungsgerät (20) dazu eingerichtet ist, Rückkopplungsantworten I_{RA} (26) alternativ oder additiv zu den Antworten I_{A} (16) in jeweils ein oder mehrere Rückmeldungen I_{RM} (66), I_{RM}' (66') an ein oder mehrere Ausgabegeräte (60), (60') zu übersetzen und über ein oder mehrere weitere Kommunikationsschnittstellen (50), (50') zu übertragen, wobei die eine oder die mehreren Rückmeldungen I_{RM} (66), I_{RM}' (66') durch das eine oder die mehreren Ausgabegeräte (60), (60') in sensorisches Feedback umgesetzt werden.

7. Verwendung eines mobilen Datenverarbeitungsgeräts (20) zum Übermitteln von Steuerbefehlen I_{S} (15) eines Bewegungserfassungsgeräts (10) an ein Infotainment-System (30) in einem Fahrzeug in Form von Anweisungen I_{A} (25), wobei die von dem Bewegungserfassungsgerät (10) gesendeten Steuerbefehle I_{S} (15) über eine erste Kommunikationsschnittstelle (40) von dem mobilen Datenverarbeitungsgerät (20) empfangen werden, die empfangenen Steuerbefehle I_{S} (15) von dem mobilen Datenverarbeitungsgerät (20) in die Anweisungen I_{A} (25) an das Infotainment-System (30) übersetzt werden und die übersetzten Anweisungen I_{A} (25) von dem mobilen Datenverarbeitungsgerät (20) über eine zweite Kommunikationsschnittstelle (41) an das Infotainment-System (30) gesendet werden.

8. Verfahren zur Übermittlung von Steuerbefehlen Is (15) von einem Bewegungserfassungsgerät (10) an ein Infotainment-System (30) in einem Fahrzeug, mindestens umfassend die Schritte:
a) Senden der Steuerbefehlen I_{S} (15) über eine erste Kommunikationsschnittstelle (40) an ein mobiles Datenverarbeitungsgerät (20),
b) Übersetzen der Steuerbefehle I_{S} (15) in Anweisungen I_{A} (25) in dem mobilen Datenverarbeitungsgerät (20) und
c) Senden der Anweisungen I_{A} (25) von dem mobilen Datenverarbeitungsgerät (20) über eine zweite Kommunikationsschnittstelle (41) an das Infotainment-System (30) .

## Claims

1. System (1), consisting of a vehicle having an infotainment system (30), a mobile data processing device (20) and a motion sensing device (10), wherein a first communication interface (40) is set up to transmit control commands I_{S} (15) from the motion sensing device (10) to the mobile data processing device (20), the mobile data processing device (20) is set up to translate the control commands I_{S} (15) into instructions I_{A} (25) for the infotainment system (30), and a second communication interface (41) is set up to transmit the instructions I_{A} (25) from the mobile data processing device (20) to the infotainment system (30).

2. System (1) according to Claim 1, wherein the mobile data processing device (20) is set up to combine multiple control commands I_{S} (15) into one or more instructions I_{A} (25).

3. System (1) according to either of the preceding claims, wherein the first communication interface (40) is set up to use a Bluetooth Low Energy protocol, and the second communication interface (41) is set up to use a Bluetooth or Wireless Fidelity or USB protocol or a radio transmission.

4. System (1) according to one of the preceding claims, wherein the control commands I_{S} (15) are provided for navigating and selecting functions and/or information of the infotainment system (30).

5. System (1) according to one of the preceding claims, wherein the second communication interface (41) is set up to transmit feedback responses I_{RA} (26) from the infotainment system (30) to the mobile data processing device (20), the mobile data processing device (20) is set up to translate feedback responses I_{RA} (26) into responses I_{R} (16) to the motion sensing device (10), and the first communication interface (40) is set up to transmit the responses I_{R} (16) from the mobile data processing device (20) to the motion sensing device (10).

6. System (1) according to Claim 4, wherein the mobile data processing device (20) is set up to translate feedback responses I_{RA} (26), as an alternative or in addition to the responses I_{A} (16), into in each case one or more acknowledgements I_{RM} (66), I_{RM}' (66') to one or more output devices (60), (60') and to transmit said acknowledgements via one or more further communication interfaces (50), (50'), the one or more acknowledgements I_{RM} (66), I_{RM}' (66') being converted into sensory feedback by the one or more output devices (60), (60').

7. Use of a mobile data processing device (20) for conveying control commands I_{S} (15) of a motion sensing device (10) to an infotainment system (30) in a vehicle in the form of instructions I_{A} (25), wherein the control commands I_{S} (15) sent by the motion sensing device (10) are received by the mobile data processing device (20) via a first communication interface (40), the received control commands I_{S} (15) are translated into the instructions I_{A} (25) for the infotainment system (30) by the mobile data processing device (20), and the translated instructions I_{A} (25) are sent from the mobile data processing device (20) to the infotainment system (30) via a second communication interface (41).

8. Method for conveying control commands I_{S} (15) from a motion sensing device (10) to an infotainment system (30) in a vehicle, at least comprising the steps of:
a) sending the control commands I_{S} (15) to a mobile data processing device (20) via a first communication interface (40),
b) translating the control commands I_{S} (15) into instructions I_{A} (25) in the mobile data processing device (20) and
c) sending the instructions I_{A} (25) from the mobile data processing device (20) to the infotainment system (30) via a second communication interface (41).

## Revendications

1. Système (1), composé d'un véhicule équipé d'un système d'infodivertissement (30), d'un appareil de traitement des données mobile (20) et d'un appareil de détection de déplacement (10), une première interface de communication (40) étant conçue pour transmettre des ordres de commande I_{S} (15) de l'appareil de détection de déplacement (10) à l'appareil de traitement des données mobile (20), l'appareil de traitement des données mobile (20) étant conçu pour traduire les ordres de commande I_{S} (15) en indications I_{A} (25) destinées au système d'infodivertissement (30) et une deuxième interface de communication (41) étant conçue pour transmettre les indications I_{A} (25) de l'appareil de traitement des données mobile (20) au système d'infodivertissement (30).

2. Système (1) selon la revendication 1, l'appareil de traitement de données mobile (20) étant conçu pour résumer plusieurs ordres de commande I_{S} (15) en une ou plusieurs indications I_{A} (25) .

3. Système (1) selon l'une quelconque des revendications précédentes, la première interface de communication (40) étant conçue pour utiliser un Protocole de faible énergie Bluetooth (Bluetooth Low Energy Protocole en anglais) et la deuxième interface de communication (41) est conçue pour utiliser un protocole de fidélité sans fil ou Bluetooth (Bluetooth or Wireless Fidelity Protocole en anglais) ou un protocole USB (USB Protocole en anglais) ou une transmission radio.

4. Système (1) selon l'une quelconque des revendications précédentes, des ordres de commande I_{S} (15) étant prévus pour naviguer et sélectionner des fonctions et/ou des informations du système d'infodivertissement (30).

5. Système (1) selon l'une quelconque des revendications précédentes, la deuxième interface de communication (41) étant conçue pour transmettre les réponses de réaction I_{RA} (26) du système d'infodivertissement (30) à l'appareil de traitement des données mobile (20), l'appareil de traitement des données mobile (20) étant conçu pour traduire les réponses de réaction I_{RA} (26) en réponses I_{R} (16) à destination de l'appareil de détection de déplacement (10) et la première interface de communication (40) étant conçue pour transmettre les réponses I_{R} (16) de l'appareil de traitement des données mobile (20) à l'appareil de détection de déplacement (10).

6. Système (1) selon la revendication 4, l'appareil de traitement des données mobile (20) étant conçu pour traduire, en variante ou en sus, les réponses de réaction I_{RA} (26) aux réponses I_{A} (16) en respectivement un ou plusieurs réactions I_{RM} (66), I_{RM}' (66') à destination d'un ou plusieurs appareils émetteurs (60), (60') et pour les transmettre via une ou plusieurs interfaces de communication (50), (50') supplémentaires, le ou les multiples réactions I_{RM} (66), IRM' (66') étant converties en rétroaction sensorielle par le ou les multiples appareils émetteurs (60), (60').

7. Utilisation d'un appareil de traitement des données mobile (20) pour transmettre les ordres de commande I_{S} (15) d'un appareil de détection de déplacement (10) à un système d'infodivertissement (30) dans un véhicule sous forme d'indications I_{A} (25), les ordres de commande I_{S} (15) émis par l'appareil de détection de déplacement (10) étant reçus via une première interface de communication (40) de l'appareil de traitement des données mobile (20), les ordres de commande I_{S} (15) reçus de l'appareil de traitement des données mobile (20) étant traduits en indications I_{A} (25) destinées au système d'infodivertissement (30) et les indications I_{A} (25) traduites de l'appareil de traitement des données mobile (20) étant envoyées au système d'infodivertissement (30) via une deuxième interface de communication (41).

8. Procédé de transmission d'ordres de commande I_{S} (15) d'un appareil de détection de déplacement (10) à un système d'infodivertissement (30) dans un véhicule, comprenant au moins les étapes suivantes :
a) envoi des ordres de commande I_{S} (15) à un appareil de traitement des données mobile (20) via une première interface de communication (40) ;
b) traduction des ordres de commande I_{S} (15) en indications I_{A} (25) dans l'appareil de traitement des données mobile (20) ; et
c) envoi des indications I_{A} (25) de l'appareil de traitement de données mobiles (20) au système d'infodivertissement (30) via une deuxième interface de communication (41).
